# EUROPEAN PATENT SPECIFICATION

(11) **EP 4 103 447 B1**
(45) Date of publication and mention of the grant of the patent: **10.06.2026**
(21) Application number: 21706649.7
(22) Date of filing: 12.02.2021
(51) Int. Cl.: B62B 3/00, B62B 5/06

(54) **HAND GRIP APPARATUS FOR USE IN STEERING A ROLL CAGE**
HANDGRIFF FÜR DIE STEUERUNG EINES ROLLKÄFIGS
APPAREIL DE PRÉHENSION À MAIN DESTINÉ À ÊTRE UTILISÉ POUR DIRIGER UNE CAGE DE PROTECTION

(30) Priority: 14.02.2020 GB 202002147
(43) Date of publication of application: 21.12.2022
(73) Proprietor: ITIP Handles Limited, Berkshire RG41 1QN (GB)
(72) Inventor: ALLDER, Simon Anthony, Wokingham Berkshire RG40 3JT (GB)
(74) Representative: Fry, David John
(86) International application number: PCT/GB2021/000014
(87) International publication number: WO 2021/160983

(56) References cited:
- WO-A1-2017/116683
- WO-A1-2018/078310
- CA-A1- 2 208 115
- DE-U1- 202016 103 882
- US-A1- 2015 054 241

## Description

This invention relates to hand grip apparatus and, more especially, this invention relates to hand grip apparatus for use in steering a roll cage.

Roll cages are well known for transporting products, for example around a warehouse or from a delivery vehicle to a supermarket or other type of shop. Each roll cage typically comprises an open mesh body section for receiving a large amount of products to be sold, and wheel means by which the roll cages are pushed or pulled. The wheel means are usually wheels, with there being two fixed wheels at one end of the roll cage and two swivel wheels at the other end of the roll cage. The swivel wheels swivel 360° and they enable direction to be imparted to the roll cage when the roll cage is being pushed or pulled. The roll cage should be pushed or pulled with the fixed wheels leading and the swivel wheels following. The swivel wheels are then able to provide rear steering. Often the roll cage is pushed or pulled incorrectly to that the swivel wheels are leading rather than following. In this case, the swivel wheels have a tendency to swivel unexpectedly and this may cause the roll cage to tip over. This is especially so if the roll cage is being manoeuvered onto a tail lift of a truck, or if the roll cage strikes a step between floor levels or strikes debris. The tipping over the roll cage may cause damage to the goods being transported in the roll cage. The damage may be in the form of broken goods and/or soiled goods, for example where broken goods have soiled other goods or where the roll cage has tipped over in non-hygienic conditions. The fixed and swivel wheels may be in the form of casters.

A further problem is that the roll cages themselves often cause injury to users pushing or pulling the roll cages due to the users doing the pushing and pulling with their fingers placed through the mesh of the roll cages. If a roll cage suddenly tips over, a user may get their fingers trapped and injured.

A yet further problem is that there is no particular position at which the roll cages should be pushed or pulled. Some users will push or pull a roll cage at a position which is higher up than other users. If the roll cage is pushed or pulled at a position which is too high up with respect to the centre of gravity of the roll cage, then this may cause an extra instability factor during pushing or pulling of the roll cage.

US 2015/054241 A1 describes rotatable hand grips for a wheelbarrow, that extend from the ends of the handles of the wheelbarrow at a comfortable angle. CA 2208115 A1 describes handles for a push-along vehicle such as a baby stroller.

It is an aim of the present invention to reduce the above mentioned problems.

According to the invention this problem is solved as defined in claim 1. Preferred embodiments are defined in the dependent claims.

In one embodiment there is provided a hand grip apparatus for use in steering a roll cage (4), the hand grip apparatus comprising: a hand grip having a hand grip portion comprising a first male connector formed as a hook; a second female connector mounted in use on the roll cage and formed as a socket; wherein the second female connector is mounted on a vertical frame part of the roll cage; and the first and second connectors parts releasably connect together to attach the hand grip to the roll cage; and the hand grip is rotatable relative to the first connector part.

The hand grip apparatus of the present invention is advantageous in that the second connector part is mounted on the roll cage in use of the hand grip apparatus. This ensures that the roll cage is gripped at the correct end for being pushed or pulled. Thus the fixed wheels will always be leading and the pivotable wheels will be following, thereby enabling directional steering and helping to avoid unexpected tipping over of the roll cage due to the roll cage being pushed or pulled with the swivel wheels leading and the fixed wheels following. Still further, the hand grip apparatus of the present invention has the hand grip portion which enables a user securely to grip the hand grip apparatus. This avoids the need for the user to place their fingers through the mesh of the roll cage and thus possibly get their fingers trapped and injured if the roll cage tips over. Yet further, the second connector part is able to be mounted on the roll cage at an optimal height with respect to the centre of gravity of the roll cage in order to ensure optimum pushing and/or pulling by users of different heights. The second connector part can easily be identified on the roll cage, for example by being brightly coloured, in order to facilitate users of the roll cage knowing where to connect the hand grip via the first connector part.

The second connector part may be mounted on the roll cage by any suitable and appropriate means. Thus, for example, where the hand grip apparatus of the present invention is for use with existing already manufactured roll cages, then the second connector part may be bolted to the roll cage. Where the hand grip apparatus of the present invention is to be used with new roll cages, then the new roll cages may be formed with the second connector part being an integral part of the roll cage.

The hand grip apparatus is one in which the first connector part is a male first connector part, and in which the second connector part is a female second connector part. The male first connector part comprises a hook and the second connector part comprises a socket.

Other configurations for the first connector part and the second connector part may be employed.

Preferably, the hand grip portion is D-shaped. Other shapes for the hand grip portion may be employed. Thus, for example, the hand grip portion may be of a circular shape, a triangular shape, a right-angled shape, a T- shape, or a straight bar shape.

The hand grip apparatus may be one in which the hand grip comprises: (i) at least one guide slot in the hand grip portion;
(ii) at least one slide portion which extends into the guide slot;
(iii) the guide slot is curved; and
(iv) the slide portion is retained in the guide slot and is slideable backwards and forwards in the guide slot.

Preferably, the guide slot is part circular. The guide slot is in excess of one half of a circle. The guide slot may be more or less than one half of a circle. Other formations for the guide slot may be employed.

The slide portion may comprise a curved formation which has a curve which is complementary to the curve of the guide slot. Other shapes for the slide portion may be employed.

The hand grip apparatus may be one in which there is one of the guide slots. The guide slot may have a retainer formation, for example a pair of inwardly extending lips, for retaining the slide portion in the guide slot.

The hand grip apparatus may alternatively be one in which there are two of the guide slots and two of the slide portions, in which there is one of the guide slots on each of opposite sides of the hand grip portion, and in which the slide portions are formed by a C-shaped aperture in one end of the connecting portion. The aperture may be a re-entrant aperture with a mouth which is defined by the two slide portions facing each other and being spaced apart from each other. The present invention also extends to a roll cage when provided with hand grip apparatus of the present invention. The roll cage may be of any suitable and appropriate construction, including known constructions of roll cages. The roll cage will typically have two of the hand grip apparatus. More or less than two of the hand grip apparatus may however be provided on the roll cage. Each unit of the hand grip apparatus may be such that much of the hand grip apparatus is able to be removed when it is desired to collapse the roll cage for storage or transportation purposes.

Embodiments of the invention will now be described solely by way of example and with reference to the accompanying drawings in which:
Figure 1 is a view from one side and the front of first apparatus of the present invention;
Figure 2 is a view like Figure 1 but with the hand grip having been rotated to a different position to that shown in Figure 1 ;
Figure 3 is a view like Figure 1 but with hand grip having been rotated to a different position to that shown in Figures 1 and 2;
Figure 4 shows the hand grip apparatus of Figure 1 being positioned for use;
Figure 5 is an enlarged view of part of Figure 1 and shows in detail part of releasable connector means forming part of the hand grip apparatus;
Figure 6 is a view from above, the front and one side of part of the releasable connector means shown in Figure 1;
Figure 7 is a view from the side and slightly to the front of second hand grip apparatus of the present invention; Figure 8 is a view like Figure 7 but from the other side of the apparatus as shown in Figure 7 and slightly more to the front;
Figure 9 is a view from one side and above of part of releasable connector means forming part of the hand grip apparatus shown in Figure 7;
Figure 10 is a view from one side and the front of part of the releasable connector means shown in the hand grip apparatus of Figure 7;
Figures 11 and 12 show how a hand grip portion of the hand grip apparatus is able to be removed from releasable connector means forming part of the hand grip apparatus; and
Figure 13 (a) - (e) shown hand grips of different shapes.

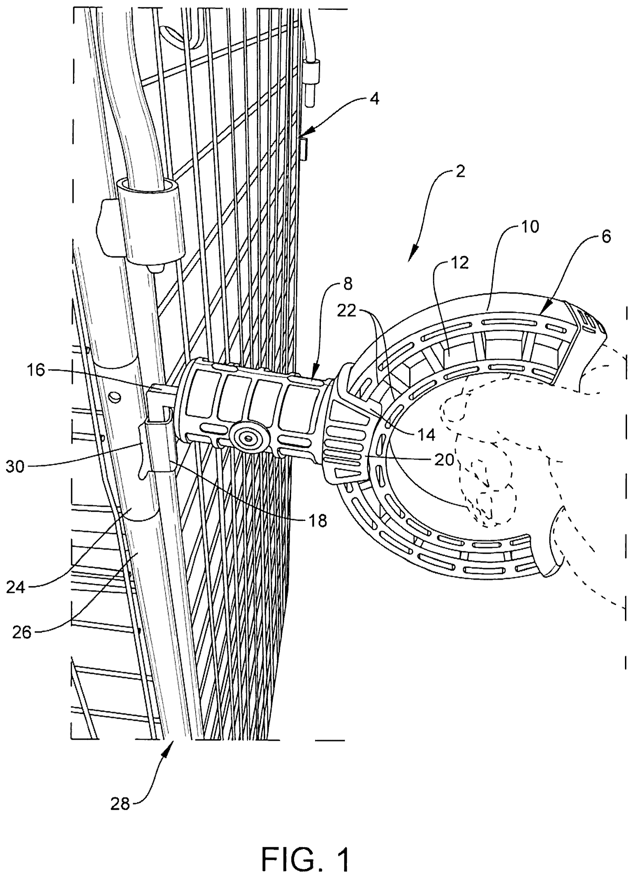

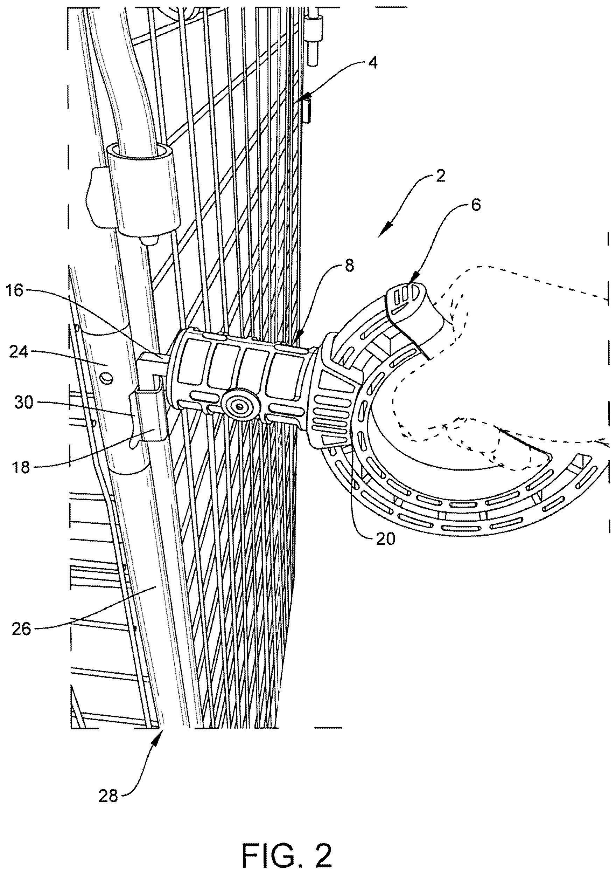

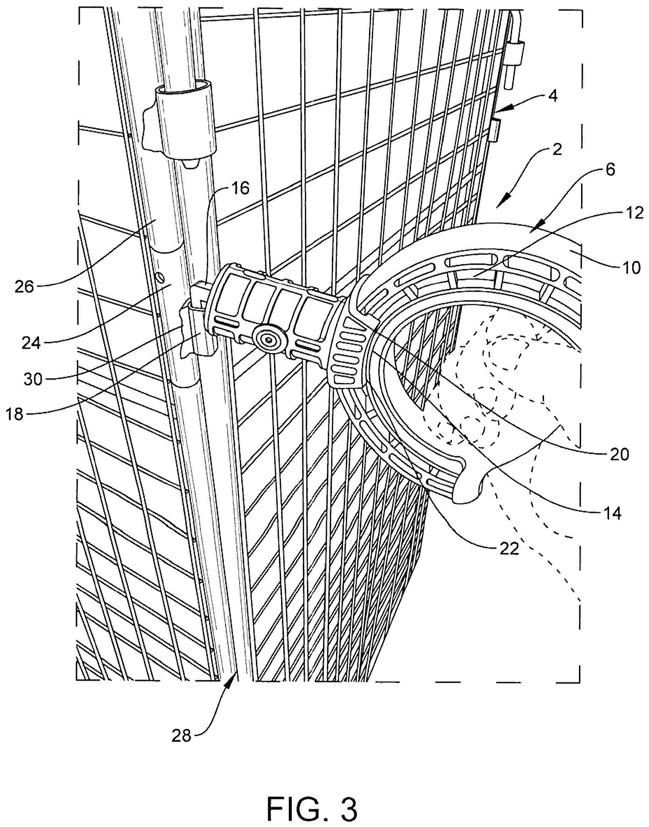

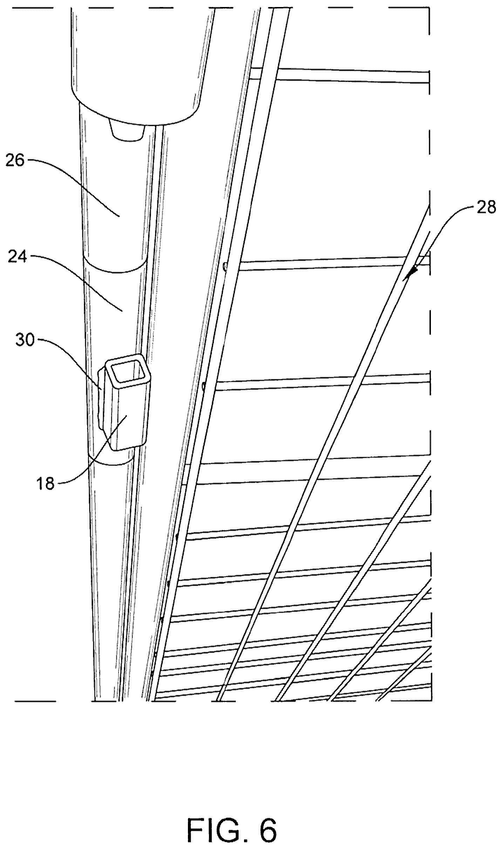

Referring to Figures 1 - 6, there is shown first hand grip apparatus 2 for use in steering a roll cage 4. The hand grip apparatus 2 comprises a hand grip 6 and releasable connector means 8 for enabling the hand grip 6 to be attached to and removed from the roll cage 4.

The hand grip 6 comprises a hand grip portion 10. There is at least one guide slot 12 in the hand grip portion 10. There is at least one slide portion 14 which extends into the guide slot 12. The guide slot 12 is curved as shown. The slide portion 14 and the guide slot 12 are configured such that the slide portion 14 is retained in the guide slot 12 and is slidable backwards and forwards in the guide slot 12.

The releasable connector means 8 comprises a first connector part 16 and a second connector part 18. The first and second connector parts 16, 18 releasably connect together. The hand grip portion 10 comprises the first connector part 16. The second connector part 18 is mounted in use on the roll cage 4. The first connector part 16 is a male first connector part having a hook as shown. The second connector part 18 is a female second connector part 18 having a socket for receiving the first connector part 16.

The hand grip portion 6 is D-shaped. The guide slot 12 is curved by being part circular as shown. More specifically, the guide slot 12 is in excess of one half of a circle.

The slide portion 14 comprises a curved formation 20 which has a curve which is complementary to the curve of the guide slot 12. As shown, the hand grip apparatus 2 is such that there is one of the guide slots 12. The guide slot 12 may have a pair of inwardly extending lips which are at positions 22 and which act to retain the slide portion 14 in the guide slot 12. Retainer formations other than inwardly extending lips may be employed. If desired, there may be two of the guide slots 12 and two of the slide portions 14. In this case, the guide slots 12 may be one on each of opposite sides of the hand grip portion 10. The slide portions 14 may be formed by a C-shaped aperture in one end of the connecting portion.

The hand grip 6 may be such that the hand grip portion 10, the guide slot 12 and the slide portion 14 may be generally as disclosed in our International Patent Application No. WO 2018/078310 A1.

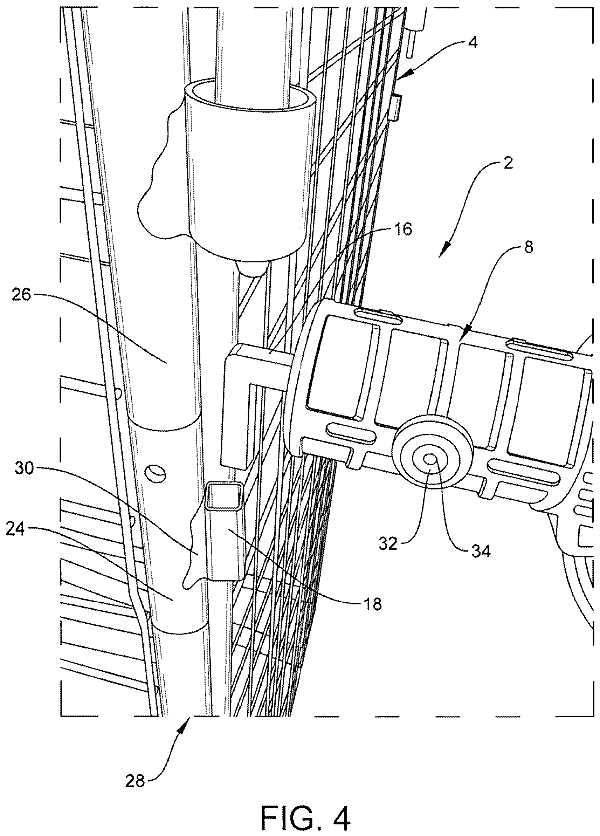

The first and second connector parts 16, 18 connect together as shown in Figures 1 - 6. The hand grip 6 may be rotated relative to the second connector part 18 as can be appreciated from a comparison of Figures 1, 2 and 3. The first connector part 16 is easily inserted into the second connector part 18 as can best be appreciated from Figures 4, 5 and 6.

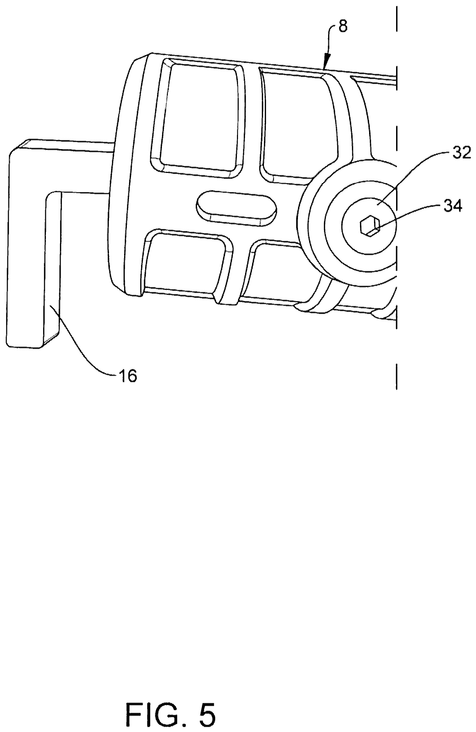

In the hand grip apparatus 2, the second connector part 18 is welded to a connector tube 24 which slides over an upright tube 26 forming part of a frame 28 of the roll cage 4. The weld between the second connector part 18 and the connector tube 24 is shown as weld 30. The connector tube 24 may be secured at a desired position along the upright tube 26 by screws, rivets or other fixing means. The first connector part 16 may be similarly connected to a male extension member extending from the hand grip 6 by screws, rivets or other fixing means. As shown in Figures 4 and 5 the fixing means is a screw 32 having a flat-sided recess 34 for receiving a tightening tool such as an Allen key.

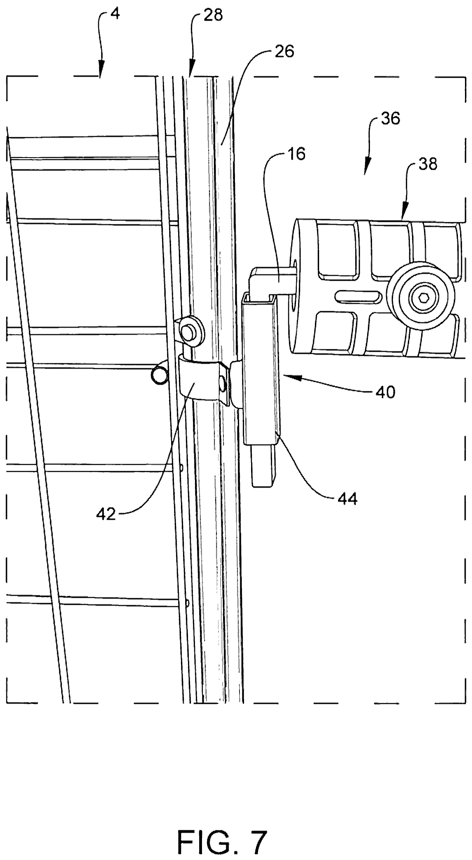

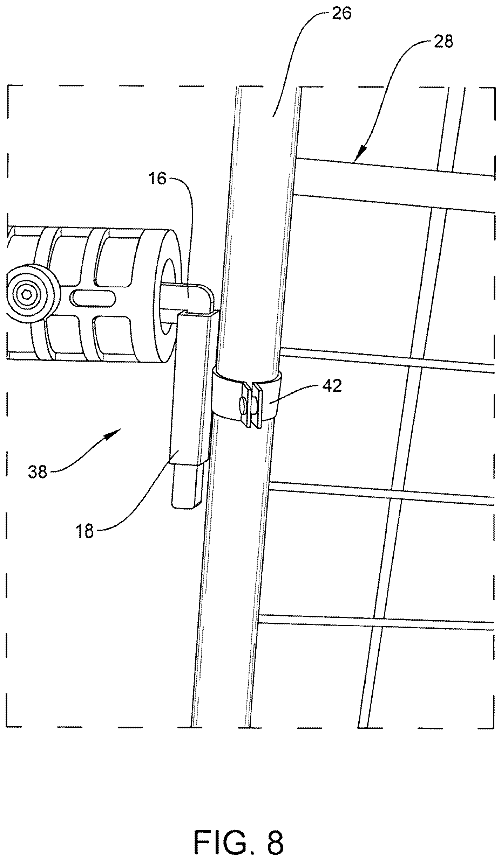

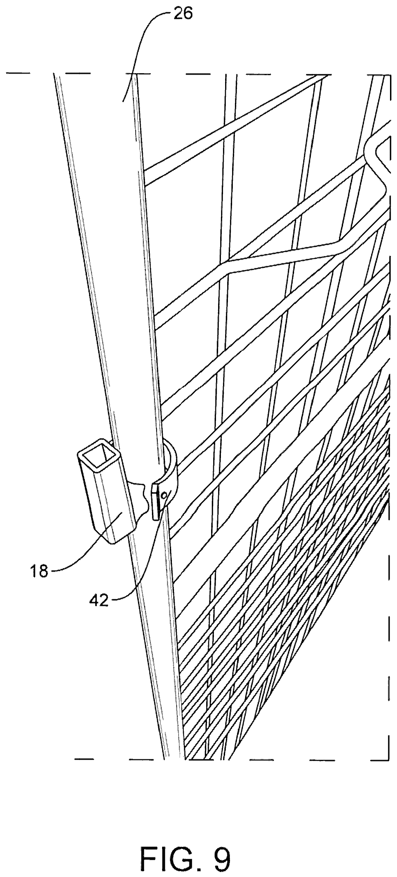

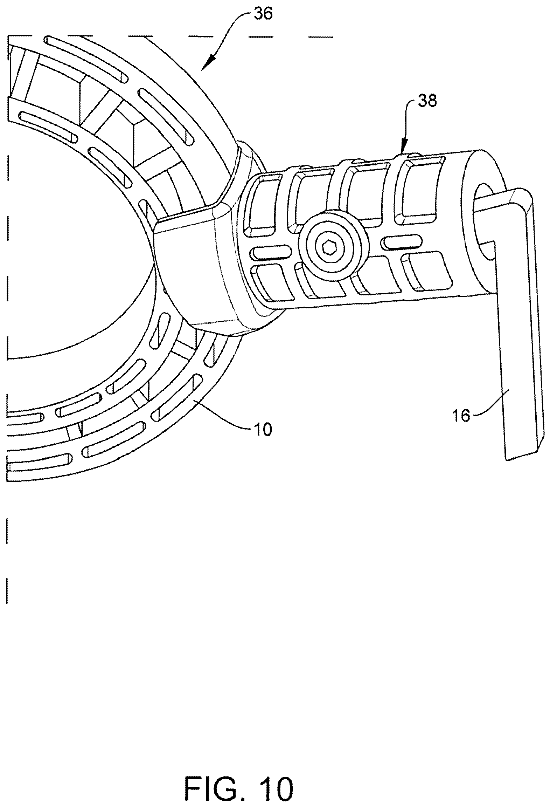

Referring now to Figures 7 - 10, there is shown second hand grip apparatus 36. Similar parts as in the first hand grip apparatus 2 have been given the same reference numerals for ease of comparison and understanding.

It will be seen that the hand grip apparatus 36 comprises releasable connector means 38. The releasable connector means 38 has a first connector part 16 which is like the first connector part 16 in the hand grip apparatus 2. The releasable connector means 38 has a second connector part 40 which includes a clip 42 as shown. The clip 42 may be any desired type of clip. Thus, for example, the clip 42 may be a jubilee clip, a hose clip, a worm drive clip, or a clamp clip. The second connector part 40 still uses the square tube 44 which forms a part of the second connector part 40. The clip 42 can be welded, or attached by fixing means such as screws or bolts to the square tube 44. The clip 42 is easily fixed to the upright tube 26 of the frame 28. Thus the clip 42 provides a convenient way of enabling the hand grip apparatus 40 to be connected to the roll cage 4. This enables the hand grip apparatus of the present invention easily to be secured to existing roll cages, and at any required height. In an alternative embodiment of the invention, the hand grip apparatus may be formed as part of original equipment manufacture for new roll cages.

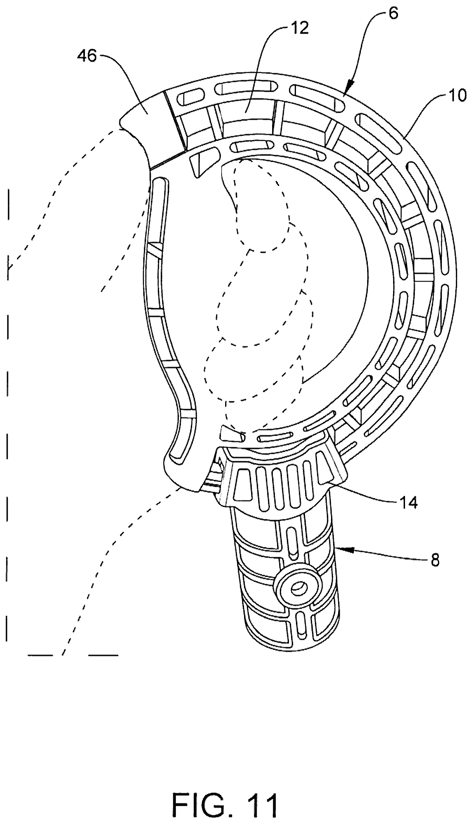

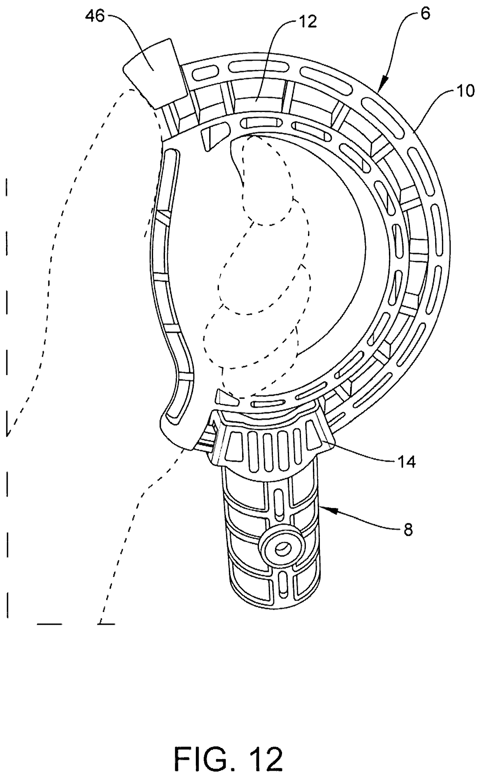

Figures 11 and 12 show how the hand grip apparatus of the present invention, for example the hand grip apparatus 2, 36, is able to be provided with a removable closure member 46 which closes one end of the guide slot 12. As shown, the removable closure member 46 can easily be slid upwardly and out of the hand grip portion 10 so that the hand grip portion 10 can then be rotated relative to the releasable connector means 8 and removed from the releasable connector means 8. If desired, the releasable connector means 8 can be left in position on the roll cage 2 and the hand grip portion 10 can be removed for cleaning and/or sanitising.

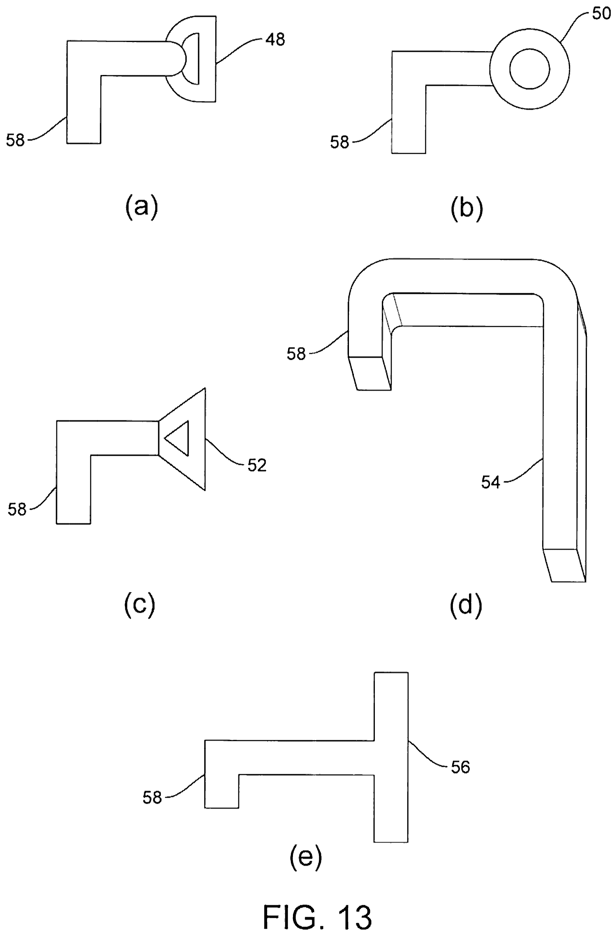

Figure 13 shows different types of hand grip portions for the hand grip. More specifically, Figure 13 (a) shows a hand grip portion 48 which is D- shaped. Figure 13 (b) shows a hand grip portion 50 which is circular in shape. Figure 13 (c) shows a hand grip portion 52 which is triangular in shape. Figure 13 (d) shows a hand grip portion 54 which is of a right angled shape. Figure 13 (e) shows a hand grip portion 56 which is T-shaped. Each hand grip portion 48, 50, 52, 54, 56 extends into a first connector part 58 of releasable connector means. The first connector part 58 is of a square cross sectional shape and it is for releasably connecting to the second connector part 18 which is also of a square cross sectional shape and which is mounted on the roll cage 4. The first connector part 58 and the second connector part 18 can be of a wide variety of complementary cross sectional shapes, for example rectangular, triangular, hexagonal, multi-pointed star shaped or oval. Such shapes cause the first connector part 58 to be fixed against rotational movement in the second connector part 18. If the first connector part 58 is of a circular cross sectional shape, then it will rotate in a second connector part 18 which is also of a circular cross sectional shape. If this rotation is not required, then the first connector part 58 can be secured against rotation in the second connector part 18 by any suitable fixing means, for example a locking screw. The hand grip portions 48, 50, 52, 54, 56 are of a simpler construction than the hand grip portion 10 of the hand grip 6. Thus the hand grip portions 48, 50, 52, 54, 56 do not vertically rotate with respect to the first connector part 16 and the second connector part 18. Thus the hand grip portions 48, 50, 52, 54, 56 are able to be manufactured more cheaply than the hand grip portion 10 if required.

The hand grip apparatus of the present invention may be such that the hand grip portion, for example the hand grip portions 10, 48, 50, 52, 54, 56, may be inwardly offset, for example by a crank, a bend or another configuration, with respect to the second connector part, for example the second connector part 18. This may help to ensure that parts of a person's hand gripping the hand grip portion do not extend beyond the width of the roll cage and thereby possibly get knocked and injured during parking of the roll cage, for example the roll cage 4, adjacent other roll cages or during steering the roll cage in narrow spaces, for example in narrow isles between stacked shelves of products.

The hand grip apparatus of the present invention enables roll cages to be pushed as required. The hand grip apparatus ensures that the roll cages are always pushed from the correct side. Good steering is optimised and sudden stopping or tipping of roll cages is minimised. During manoeuvres in confined spaces, for example in the back of a lorry or in a bay in a warehouse, a person can push a trolley in comfort.

It is to be appreciated that the embodiments of the invention described above with reference to the accompanying drawings have been given by way of example only and that modifications may be effected. Thus, for example, various types of roll cases 4 may be employed. The roll cages 4 may be assembled and collapsed in the same manner as known roll cages. Other types of hand grip 6 and other types of releasable connector means 8 may be employed.

## Claims

1. A hand grip apparatus (2) for use in steering a roll cage (4), the hand grip apparatus (2) comprising:
(i) a hand grip (6) comprising a hand grip portion (10); and
(ii) releasable connector means (8) for enabling the hand grip (6) to be attached to and removed from the roll cage (4), wherein the releasable connector means (8) comprises first and second connector parts (16, 18) which releasably connect together;
(iii) wherein the hand grip (6) is connected to the first connector part (16);
(iv) wherein the second connector part (18) is adapted to be mounted in use on a vertical frame part (26) of the roll cage (4);
(v) wherein the first connector part (16) is a male first connector part formed as a hook, and
the second connector part (18) is a female second connector part formed as a socket,
(vi) and wherein the hand grip is rotatable relative to the first connector part (16).

2. Hand grip apparatus according to claim 1, in which the hand grip portion is D-shaped.

3. Hand grip apparatus according to any one of the preceding claims, in which the hand grip portion comprises:
(i) at least one guide slot (12) in the hand grip portion;
(ii) at least one slide portion (14) which extends into the guide slot;
(iii) the guide slot is curved; and
(iv) the slide portion is retained in the guide slot and is slideable backwards and forwards in the guide slot.

4. Hand grip apparatus according to claim 3, in which the guide slot is part circular.

5. Hand grip apparatus according to claim 3 or claim 4, in which the guide slot is in excess of one half of a circle.

6. Hand grip apparatus according to any one of claims 3 to 5, in which the slide portion comprises a curved formation which has a curve which is complementary to the curve of the guide slot.

7. Hand grip apparatus according to any one of claims 3 to 6, in which there is one of the guide slots.

8. Hand grip apparatus according to claim 7, in which the guide slot has a retainer formation for retaining the slide portion in the guide slot.

9. Hand grip apparatus according to claim 8, in which the retainer formation is a pair of inwardly extending lips.

10. Hand grip apparatus according to any one of claims 3 to 6, in which there are two of the guide slots and two of the slide portions, in which there is one of the guide slots on each of opposite sides of the hand grip portion, and in which the slide portions are formed by a C-shaped aperture in one end of a connecting portion.

11. A roll cage comprising the hand grip apparatus according to any one of the preceding claims.

12. A roll cage according to claim 11, in which there are two of the hand grip apparatus.

## Patentansprüche

1. Handgriffvorrichtung (2) zur Verwendung beim Lenken eines Rollkäfigs (4), wobei die Handgriffvorrichtung (2) Folgendes umfasst:
(i) einen Handgriff (6), der einen Handgriffabschnitt (10) umfasst; und
(ii) lösbare Verbindungsmittel (8) zum Ermöglichen, dass der Handgriff (6) an dem Rollkäfig (4) angebracht und von diesem entfernt wird, wobei die lösbaren Verbindungsmittel (8) erste und zweite Verbindungsteile (16, 18) umfassen, die lösbar miteinander verbunden sind;
(iii) wobei der Handgriff (6) mit dem ersten Verbindungsteil (16) verbunden ist;
(iv) wobei der zweite Verbindungsteil (18) dazu angepasst ist, bei Verwendung an einem vertikalen Rahmenteil (26) des Rollkäfigs (4) montiert zu werden;
(v) wobei der erste Verbindungsteil (16) ein erster Steckverbindungsteil ist, der als Haken ausgebildet ist, und der zweite Verbindungsteil (18) ein zweiter aufnehmender Verbindungsteil ist, der als Buchse ausgebildet ist,
(vi) und wobei der Handgriff relativ zu dem ersten Verbindungsteil (16) drehbar ist.

2. Handgriffvorrichtung nach Anspruch 1, bei der der Handgriffabschnitt D-förmig ist.

3. Handgriffvorrichtung nach einem der vorhergehenden Ansprüche, bei der der Handgriffabschnitt Folgendes umfasst:
(i) mindestens einen Führungsschlitz (12) in dem Handgriffabschnitt;
(ii) mindestens einen Gleitabschnitt (14), der sich in den Führungsschlitz erstreckt;
(iii) wobei der Führungsschlitz gekrümmt ist; und
(iv) wobei der Gleitabschnitt in dem Führungsschlitz gehalten wird und in dem Führungsschlitz rückwärts und vorwärts verschiebbar ist.

4. Handgriffvorrichtung nach Anspruch 3, bei der der Führungsschlitz teilweise kreisförmig ist.

5. Handgriffvorrichtung nach Anspruch 3 oder Anspruch 4, bei der der Führungsschlitz größer als eine Hälfte eines Kreises ist.

6. Handgriffvorrichtung nach einem der Ansprüche 3 bis 5, bei der der Gleitabschnitt ein gekrümmtes Gebilde umfasst, das eine Krümmung aufweist, die zu der Krümmung des Führungsschlitzes komplementär ist.

7. Handgriffvorrichtung nach einem der Ansprüche 3 bis 6, bei der einer der Führungsschlitze vorhanden ist.

8. Handgriffvorrichtung nach Anspruch 7, bei der der Führungsschlitz ein Haltegebilde zum Halten des Gleitabschnitts in dem Führungsschlitz aufweist.

9. Handgriffvorrichtung nach Anspruch 8, bei der das Haltegebilde ein Paar von sich nach innen erstreckenden Lippen ist.

10. Handgriffvorrichtung nach einem der Ansprüche 3 bis 6, bei der zwei der Führungsschlitze und zwei der Gleitabschnitte vorhanden sind, bei der einer der Führungsschlitze auf jeder der gegenüberliegenden Seiten des Handgriffabschnitts vorhanden ist und bei der die Gleitabschnitte durch eine C-förmige Öffnung in einem Ende eines Verbindungsabschnitts ausgebildet sind.

11. Rollkäfig, umfassend die Handgriffvorrichtung nach einem der vorhergehenden Ansprüche.

12. Rollkäfig nach Anspruch 11, bei dem zwei der Handgriffvorrichtung vorhanden sind.

## Revendications

1. Appareil de préhension à main (2) destiné à être utilisé pour diriger une cage de protection (4), l'appareil de préhension à main (2) comprenant :
(i) une poignée (6) comprenant une partie de préhension à main (10) ; et
(ii) un moyen de raccord libérable (8) pour permettre la fixation de la poignée (6) à la cage de protection (4) et son retrait de celle-ci, ledit moyen de raccord libérable (8) comprenant des première et seconde parties de raccord (16, 18) qui sont reliées ensemble de manière libérable ;
(iii) ladite poignée (6) étant reliée à la première partie de raccord (16) ;
(iv) ladite seconde partie de raccord (18) étant adaptée pour être montée lors de l'utilisation sur une partie de cadre vertical (26) de la cage de protection (4) ;
(v) ladite première partie de raccord (16) étant une première partie de raccord mâle formée comme un crochet, et ladite seconde partie de raccord (18) étant une seconde partie de raccord femelle formée comme une douille,
(vi) et ladite poignée pouvant tourner par rapport à la première partie de raccord (16).

2. Appareil de préhension à main selon la revendication 1, ladite partie de préhension à main étant en forme de D.

3. Appareil de préhension à main selon l'une quelconque des revendications précédentes, ladite partie de préhension à main comprenant :
(i) au moins une fente de guidage (12) dans la partie de préhension à main ;
(ii) au moins une partie coulissante (14) qui s'étend dans la fente de guidage ;
(iii) la fente de guidage est incurvée ; et
(iv) la partie coulissante est retenue dans la fente de guidage et peut coulisser d'avant en arrière dans la fente de guidage.

4. Appareil de préhension à main selon la revendication 3, ladite fente de guidage étant partiellement circulaire.

5. Appareil de préhension à main selon la revendication 3 ou la revendication 4, ladite fente de guidage étant supérieure à un demi-cercle.

6. Appareil de préhension à main selon l'une quelconque des revendications 3 à 5, ladite partie coulissante comprenant une partie conformée incurvée qui présente une courbe qui est complémentaire à la courbe de la fente de guidage.

7. Appareil de préhension à main selon l'une quelconque des revendications 3 à 6, dans lequel se trouve l'une des fentes de guidage.

8. Appareil de préhension à main selon la revendication 7, ladite fente de guidage comportant une partie conformée de retenue destinée à retenir ladite partie coulissante dans ladite fente de guidage.

9. Appareil de préhension à main selon la revendication 8, ladite partie conformée de retenue étant une paire de lèvres s'étendant vers l'intérieur.

10. Appareil de préhension à main selon l'une quelconque des revendications 3 à 6, dans lequel se trouvent deux des fentes de guidage et deux des parties coulissantes, dans lequel se trouve l'une des fentes de guidage sur chacun des côtés opposés de la partie de préhension à main, et dans lequel les parties coulissantes sont formées par une ouverture en forme de C dans une extrémité d'une partie de raccordement.

11. Cage de protection comprenant l'appareil de préhension à main selon l'une quelconque des revendications précédentes.

12. Cage de protection selon la revendication 11, dans laquelle se trouvent deux des appareils de préhension à main.
